# EUROPÄISCHE PATENTANMELDUNG

(11) **EP 4 663 559 A2**
(43) Veröffentlichungstag der Anmeldung: **17.12.2025**
(21) Anmeldenummer: 25179468.1
(22) Anmeldetag: 28.05.2025
(51) Int. Cl.: B65B 5/02, B65B 5/06, B65B 7/28, B65B 25/14, B65B 57/00, B65B 57/02, B65B 57/08, B65B 57/18, B65B 61/28, B65G 57/03, B65B 19/02, G05B 19/418

(54) **VERFAHREN UND ANLAGE ZUM BEFÜLLEN VON KARTONPACKUNGEN UND ANORDNEN AUF EINER PALETTE**

(30) Priorität: 13.06.2024 DE 102024116612
(71) Anmelder: Focke & Co. (GmbH & Co. KG), 27283 Verden (DE)
(72) Erfinder: Lenfers, Daniel, 48727 Billerbeck (DE); Neumeister, Annika, 26676 Barßel (DE); Sachs, Frank, 26683 Saterland (DE); Heimann, Daniela, 26655 Westerstede (DE)
(74) Vertreter: Aulich, Martin

(57) **Zusammenfassung**

Die Erfindung betrifft ein Verfahren zum Befüllen von oben offenen Kartonpackungen (12) mit jeweils einer Gruppe von Gegenständen sowie zum Stapeln der befüllten (insbesondere identischen) Kartonpackungen (12) auf einer Palette (18), bei dem einzelne Kartonpackungen (12) in einer Packmaschine (20) mit den Gegenständen der jeweiligen Gruppe befüllt und danach entlang einer insbesondere geradlinigen Förderstrecke zu einer Palettiermaschine (21) gefördert werden, in der mehrere Stapel (11) von Kartonpackungen (12) mit jeweils aufeinandergestapelten Kartonpackungen (12) gebildet und auf einer gemeinsamen Palette (18) angeordnet werden, wobei mehrere für dieselbe Palette (18) bestimmte Kartonpackungen (12) in der Packmaschine (20) nach dem Befüllen derselben mit einem die jeweilige Kartonpackung (12) verschließenden Deckel (16) versehen werden. Die Erfindung ist dadurch gekennzeichnet, dass in der Packmaschine (20) nicht sämtliche für dieselbe Palette (18) bestimmten Kartonpackungen (12) mit einem Deckel (16) versehen werden, sondern gezielt nur eine Untermenge von hierfür vorgesehenen Kartonpackungen (12), mindestens allerdings jeweils diejenige Kartonpackung (12), die für die jeweils oberste Kartonpackung (12) jedes Stapels (11) der Palette (18) bestimmt ist.

## Beschreibung

Die vorliegende Erfindung betrifft ein Verfahren sowie eine Anlage zum Befüllen von oben offenen bzw. eine obere Öffnung aufweisenden Kartonpackungen mit jeweils einer Gruppe von Gegenständen sowie zum Stapeln der befüllten (insbesondere identischen) Kartonpackungen auf einer Palette, bei dem einzelne Kartons in einer Packmaschine mit den Gegenständen der jeweiligen Gruppe befüllt und danach entlang einer insbesondere geradlinigen Förderstrecke zu einer Palettiermaschine gefördert werden, in der mehrere Stapel von Kartonpackungen mit jeweils aufeinandergestapelten Kartonpackungen gebildet und auf einer gemeinsamen Palette angeordnet werden, wobei mehrere für dieselbe Palette bestimmte Kartonpackungen in der Packmaschine nach dem Befüllen derselben mit einem die jeweilige Kartonpackung verschließenden Deckel versehen werden.

Im Stand der Technik werden von der Packmaschine sämtliche für eine Palette bestimmte Kartonpackungen mit jeweils einem solchen, die jeweilige Kartonpackung verschließenden Deckel versehen, bevor sie in der Palettiermaschine auf der jeweiligen Palette gestapelt werden. Die Deckel sorgen unter anderem dafür, dass der Inhalt der Kartonpackungen, beispielsweise Gruppen von Lebensmittelpackungen, vor äußeren Einflüssen, wie etwa Staub etc., geschützt ist. Die Deckel erhöhen dabei allerdings das Gewicht der Palette und sind aus Kosten- sowie Umweltgründen nachteilig.

Ausgehend hiervon ist es Aufgabe der vorliegenden Erfindung, das eingangs genannte Verfahren und die eingangs genannte Anlage weiterzuentwickeln.

Diese Aufgabe wird gelöst durch ein Verfahren mit den Merkmalen des Anspruchs 1 und eine Anlage mit den Merkmalen des Anspruchs 12.

Danach ist ein erfindungsgemäßes Verfahren dadurch gekennzeichnet, dass in der Packmaschine nicht sämtliche für dieselbe Palette bestimmten Kartonpackungen mit einem Deckel versehen werden, sondern gezielt nur eine Untermenge von hierfür vorgesehenen Kartonpackungen, mindestens allerdings jeweils diejenige Kartonpackung, die für die jeweils oberste Kartonpackung jedes Stapels der Palette bestimmt ist.

Vorteilhafterweise werden dabei durch die Packmaschine zwar zumindest die Öffnungen der Kartonpackungen der obersten Lage von Kartonpackungen der jeweiligen Palette bzw. der jeweiligen Stapel der Palette durch Deckel verschlossen, einige oder alle Kartonpackungen anderer Lagen werden von der Packmaschine gezielt nicht mit einem Deckel versehen, was zu einer (je nach Anzahl eingesparter Deckel erheblichen) Reduktion des Palettengewichts führt sowie zu Materialersparnis.

Indem erfindungsgemäß zumindest die Kartonpackungen der obersten Lage durch Deckel verschlossen sind, kann sichergestellt werden, dass auch jede Kartonpackung der darunter angeordneten Lage(n) auf der Palette in jedem Fall verschlossen ist. Und zwar entweder jeweils ebenfalls durch einen entsprechenden Deckel oder aber jeweils durch die unmittelbar darüber angeordnete Kartonpackung der nächsthöheren Lage.

Vorzugsweise können die Kartonpackungen (im unbefüllten Zustand) entsprechend jeweils über eine ganz oder teilweise offene Oberseite verfügen, die nach dem Befüllen entweder in der Packmaschine mit dem jeweiligen Deckel oder in der Palettiermaschine mit einer von der Palettiermaschine unmittelbar darüber angeordneten (insbesondere identischen) Kartonpackung vollständig verschlossen wird.

Weiter vorzugsweise kann, insbesondere zur Stabilisierung der Stapel auf der Palette, in einem, dem oder jedem Stapel der Palette, ggf. zusätzlich, mindestens eine unterhalb der obersten Kartonpackung des jeweiligen Stapels in einer Zwischenebene befindliche Kartonpackung mit einem Deckel versehen werden.

Vorteilhafterweise können insbesondere zur Stabilisierung der Stapel auf der Palette alle Kartonpackungen sämtlicher Stapel, die sich in einer gemeinsamen, unterhalb der jeweiligen obersten Kartonpackung befindlichen Zwischenebene befinden, mit einem Deckel versehen werden.

Weiter vorzugsweise kann vorgesehen sein, dass eine Steuereinrichtung, insbesondere die Steuereinheit der Palettiermaschine, der Packmaschine im Betrieb der Packmaschine für jede Kartonpackung, die diese befüllt, vorgibt, ob die jeweilige Kartonpackung mit einem Deckel zu versehen ist oder nicht, vorzugsweise unter Übermittlung dieser Vorgaben über eine zwischen der Palettiermaschine und der Packmaschine direkt verlaufende, drahtlose oder drahtgebundene Kommunikationsleitung bzw. einen Kommunikationskanal.

Dabei können der Steuereinrichtung vor dem Betrieb der Packmaschine von einem Benutzer über eine insbesondere der Palettiermaschine zugeordnete Kommunikationsschnittstelle Produktionsdaten zu dem Aufbau der Stapel der jeweiligen Palette übermittelbar und vorgebbar sein, die im Betrieb auf der jeweiligen Palette angeordnet werden sollen. Insbesondere Produktionsdaten, die umfassen, für welche der zu befüllenden Kartonpackungen der Stapel derjenigen Palette, für die diese bestimmt sind, jeweils ein Deckel vorgesehen ist und für welche nicht und/oder wie viele Stapel von Kartonpackungen auf der jeweiligen Palette angeordnet werden sollen, für die diese bestimmt sind, und wie viele Kartonpackungen jeder Stapel der jeweiligen Palette aufweisen soll.

Die Steuereinrichtung kann die Produktionsdaten dann in eine Abfolge von Steuerbefehlen umsetzen, auf Basis derer die Packmaschine die Kartonpackungen, die für die jeweilige Palette bestimmt sind, entweder mit einem Deckel versieht oder nicht.

Was die Position der Palettiermaschine im Fertigungsablauf betrifft, so kann diese unmittelbar stromab der Packmaschine angeordnet sein, insbesondere ohne dass eine weitere Maschine oder eine weitere Fertigungsstation zwischen ihnen angeordnet ist, sodass die befüllten Kartonpackungen, vorzugsweise entlang einer geradlinigen Förderstrecke, direkt von der Palettiermaschine zu der Packmaschine gefördert werden, beispielsweise mittels eines die beiden Maschinen unterbrechungsfrei bzw. direkt verbindenden Förderers.

Die Packmaschine kann im Übrigen ein insbesondere in ihrem Maschinentakt arbeitendes Aggregat aufweisen, das die Deckel (im Maschinentakt) auf die Kartonpackungen aufbringt und das jeweils, insbesondere von einer oder der Steuereinrichtung, bevorzugt einer oder der Steuereinheit der Packmaschine, für jede Kartonpackung, für die kein Deckel vorgesehen ist, gesperrt wird, sodass es auf diese keinen Deckel aufbringt.

Weiter kann vorgesehen sein, dass mittels eines insbesondere optischen Sensors, der im Bereich und/oder stromab eines oder des Aggregats zum Aufbringen der Deckel auf die Kartonpackungen angeordnet ist, geprüft wird, ob die jeweilige Kartonpackung einen Deckel aufweist oder nicht.

Dabei kann für den Fall, dass die Prüfung ergibt, dass die geprüfte Kartonpackung keinen Deckel aufweist, für sie aber ein Deckel vorgesehen ist, ein Fehlersignal erzeugt werden, und/oder für den Fall, dass die Prüfung ergibt, dass die geprüfte Kartonpackung einen Deckel aufweist, für sie aber kein Deckel vorgesehen ist, ein Fehlersignal erzeugt werden.

Bevorzugt wird die Packmaschine und/oder die Palettiermaschine nach einem solchen Fehlersignal gestoppt.

Eine erfindungsgemäße Anlage ist schließlich entsprechend dadurch gekennzeichnet, dass sie eine Steuereinrichtung aufweist, die derart ausgebildet und eingerichtet ist, dass in der Packmaschine durch das Aggregat zum Aufbringen der Deckel nicht sämtliche für dieselbe Palette bestimmten Kartonpackungen mit einem Deckel versehen werden, sondern gezielt nur eine Untermenge von hierfür vorgesehenen Kartonpackungen, mindestens allerdings jeweils diejenige Kartonpackung, die für die jeweils oberste Kartonpackung jedes Stapels der Palette bestimmt ist.

Weitere Merkmale der vorliegenden Erfindung ergeben sich aus den beigefügten Patentansprüchen, der nachfolgenden Beschreibung bevorzugter Ausführungsbeispiele der Erfindung sowie aus den beigefügten Zeichnungen. Darin zeigt:

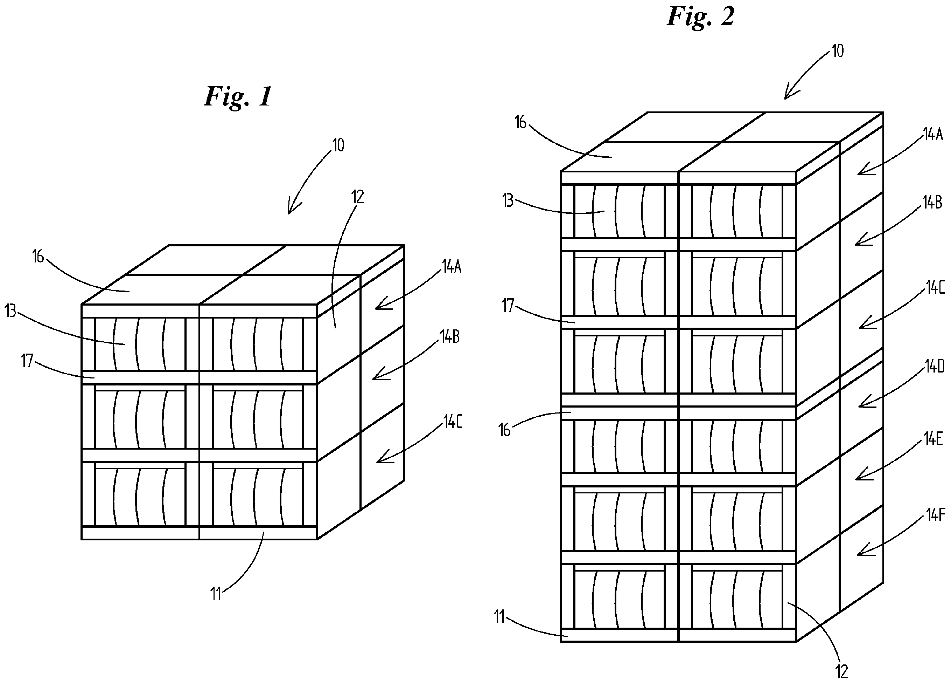

- Fig. 1: eine Schrägansicht einer Gruppe von vier Stapeln von jeweils drei übereinander angeordneten, befüllten Kartonpackungen mit jeweils darin angeordneten Produkten, wobei die Kartonpackungen der obersten Lage der Gruppe von Kartonpackungen bzw. die obersten Kartonpackungen der jeweiligen Stapel jeweils einen Deckel aufweisen, der deren jeweilige, zuvor offene Oberseite verschließt,
- Fig. 2: eine Schrägansicht wie in Fig. 2 einer anderen Gruppe von vier Stapeln von jeweils sechs übereinander angeordneten, befüllten Kartonpackungen, wobei nicht nur die Kartonpackungen der obersten Lage der Gruppe mit Deckeln verschlossen sind, sondern zur Stabilisierung der Stapel und somit auch der gesamten Gruppe auch die Kartonpackungen der drittuntersten Lage.

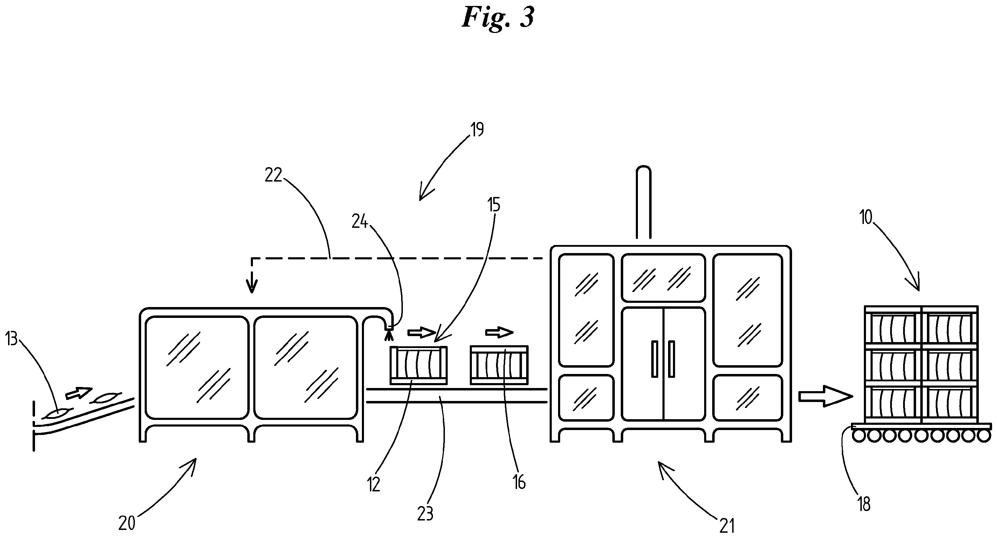

- Fig. 3: eine schematische Ansicht einer Anlage zum Befüllen der zunächst oben offenen Kartonpackungen aus Fig. 1 mit Produkten sowie zum Stapeln der befüllten Kartonpackungen auf einer Palette, umfassend unter anderem eine Packmaschine sowie eine stromab der Packmaschine angeordnete Palettiermaschine.

Die in den Fig. 1 und 2 gezeigten Gruppen 10 von Stapeln 11 aus übereinander angeordneten Kartonpackungen 12 können mit jeder Art von Produkten 13 befüllt sein, beispielsweise, wie im vorliegenden Fall, mit Tüten mit Lebensmitteln, aber auch mit Zigarettenstangen, Hygieneartikeln, wie Windeln, oder dergleichen mehr. Auf die Art der Produkte 13 kommt es erfindungsgemäß nicht an.

Die Gruppe 10 aus Fig. 1 ist aus vier Stapeln 11 von jeweils drei übereinander gestapelten bzw. angeordneten, identischen Kartonpackungen 12 gebildet. Die Gruppe 10 verfügt dabei von unten nach oben über jeweils drei (horizontale) Lagen 14 A - C von Kartonpackungen 12, in denen jeweils vier Kartonpackungen 12 angeordnet sind.

Die Gruppe 10 aus Fig. 2 ist ebenfalls aus vier Stapeln 11 von auf diese Weise übereinander angeordneten, identischen Kartonpackungen 12 gebildet, allerdings umfasst dabei jeder Stapel 11 jeweils sechs solcher Kartonpackungen 12. Entsprechend weist die Gruppe 10 der Fig. 2 sechs (horizontale) Lagen 14 A - F von übereinander angeordneten Kartonpackungen 12 auf.

Die jeweils oberste Lage 14 A der Stapel 11 aus Kartonpackungen 12 der Figuren 1 und 2 ist mit Deckeln 16 versehen, die (bezogen auf den unbefüllten Zustand der Kartonpackungen 12) oben offene Oberseiten 15 der Kartonpackungen 12 verschließen und die Produkte 13 auf diese Weise vor Schmutz oder anderen äußeren Einflüssen schützen.

In der Gruppe 10 der Fig. 1 sind die zwei weiteren Lagen 14 B, C unterhalb der Lage 14 A allerdings vorteilhafterweise nicht mit Deckeln 16 verschlossen, um Gewicht und Material zu sparen, allerdings dennoch geschützt, da die offene Oberseite 15 jeder Kartonpackung 12 der Lagen 14 B, C durch eine Bodenseite 17 der jeweils unmittelbar über ihr angeordneten Kartonpackung 12 überdeckt bzw. verschlossen ist.

In der Gruppe 10 der Fig. 2 sind die Kartonpackungen 12 der Lagen 14 B, C, E, F auf dieselbe Weise von der jeweils darüber angeordneten Kartonpackung 12 verschlossen. Anders als in der Gruppe 10 der Fig. 1 sind allerdings nicht nur die Kartonpackungen 12 der obersten Lage 14 A mit Deckeln 16 verschlossen, sondern zusätzlich sind auch die Kartonpackungen 12 einer Zwischenlage, nämlich die Kartonpackungen 12 der Lage 14 D, mit Deckeln 16 versehen. Diese Zwischenlage 14 D soll die gesamte Gruppe 10 stabilisieren.

Vorteilhafterweise sind entsprechend zumindest die oberen Öffnungen der Kartonpackungen 12 der obersten Lage 14 A von Kartonpackungen 12 durch Deckel 16 verschlossen, sämtliche (Fig. 1) oder die Mehrzahl (Fig. 2) von Kartonpackungen 12 anderer Lagen 14 B - F sind gezielt allerdings nicht mit einem Deckel 16 versehen, was - im Vergleich zu Gruppen von Stapeln von Kartonpackungen des Standes der Technik, bei denen in der Regel jede Kartonpackung mit einem Deckel versehen ist - unter anderem zu einer (je nach Anzahl eingesparter Deckel erheblichen) Reduktion des Gewichts der jeweiligen Gruppe führt sowie zu Materialersparnis, da eine Vielzahl von Deckeln eingespart werden kann.

Indem dabei zumindest die Kartonpackungen 12 der obersten Lage 14 A durch Deckel 16 verschlossen sind, kann gelichzeitig sichergestellt werden, dass auch jede Kartonpackung 16 der darunter angeordneten Lage(n) 14 A - F in jedem Fall verschlossen ist. Und zwar entweder jeweils ebenfalls durch einen entsprechenden Deckel 16 (Lage 14 D in Fig. 2) oder aber jeweils durch die unmittelbar darüber angeordnete Kartonpackung 12 der nächsthöheren Lage (Lagen 14 B, C, E - F in Fig. 1 bzw. 2).

Mit der in der Fig. 3 gezeigten Beispielanlage 19 ist es möglich, die beschriebenen Gruppen 10 auf erfindungsgemäße Weise zu produzieren bzw. zusammenzustellen.

Dazu werden in der Anlage 19 die zunächst oben offenen Kartonpackungen 12 mit den Produkten 13 befüllt, anschließend gezielt nur einige der Kartonpackungen 12 mit Deckeln 16 versehen, mindestens aber die jeweils oberste Lage 14 A von Kartonpackungen 12, und die Kartonpackungen 12 anschließend unter Bildung der jeweiligen aus Stapeln 11 gebildeten Gruppe 10 auf einer Palette 18 angeordnet.

Zu diesem Zweck weist die Anlage 19 eine Packmaschine 20 auf sowie stromab derselben eine Palettiermaschine 21.

In der Packmaschine 20 werden in an sich bekannter Weise Faltzuschnitte für die Kartonpackungen 14 zu fertigen Kartonpackungen 12 mit oben offener Oberseite 15 gefaltet. Anschließend oder auch schon während des Faltprozesses wird jede Kartonpackung 12 mit einer Gruppe von Produkten 13, die der Packmaschine 20 zugeführt werden, befüllt, und zwar zweckmäßigerweise über die jeweilige offene Oberseite 15. Die hierbei stattfindenden Prozesse sind an sich bekannt.

Die Packmaschine 20 weist darüber hinaus ein nicht gezeigtes Aggregat zum Aufbringen der Deckel 16 auf die Kartonpackungen 12 auf. Die Organe, die ein solches Aggregat aufweisen kann, um die Deckel 16 aufzubringen, sind bekannt. Denkbar sind auch hier unter anderem Greifmittel, die den jeweiligen Deckel 16 greifen und auflegen.

Die jeweils oben offenen, mit den Produkten 13 befüllten Kartonpackungen 12 werden dann nach Verlassen der Packmaschine 20 mit einem Förderer 23 mit vorliegend geradliniger Förderstrecke direkt zu der Palettiermaschine 21 gefördert.

In der Palettiermaschine 21 werden die einzelnen befüllten Kartonpackungen 12 unter Anordnung auf einer jeweiligen Palette 18 zu der jeweiligen Gruppe 10 zusammengestellt, indem sie jeweils unter Bildung der einzelnen Stapel 11 aufeinandergestellt werden. Die hierfür in der Palettiermaschine 21 erforderlichen Organe, wie etwa Greifarme etc., sind bekannt.

Besonders wichtig ist nun, dass mittels einer nicht gezeigten Steuereinrichtung der Anlage 19, die beispielsweise auch gleichzeitig die Steuereinheit der Palettiermaschine 21 sein kann oder diese umfassen kann, der Packmaschine 20 jeweils gemeldet wird, etwa über einen Informations- bzw. Kommunikationskanal 22, welche der von ihr befüllten oder zu befüllenden Kartonpackungen 12 im Anschluss an den Befüllvorgang mit einem Deckel 16 zu versehen sind und welche nicht. Dies ist insbesondere abhängig davon, für welche Palette 18 und insbesondere für welche Position innerhalb der Gruppe 10, die die Palettiermaschine 21 zusammenstellt, vergleiche Fig. 1 und 2, die jeweilige Kartonpackung 12 vorgesehen ist.

Dabei kann vorgesehen sein, dass die Steuereinrichtung der Anlage 19 derart ausgebildet und eingerichtet ist, dass das Aggregat zum Aufbringen der Deckel 16 auf die Kartonpackungen 12 der Packmaschine 20 eigentlich standardmäßig beispielsweise im Maschinentakt einen Deckel 16 auf jede befüllte Kartonpackung 12 aufbringt bzw. aufbringen würde, dass das Aggregat aber jeweils für jede Kartonpackung 12, für die explizit kein Deckel 16 vorgesehen ist, gesperrt wird, sodass es auf diese dann keinen Deckel 16 aufbringt.

Der Steuereinrichtung könnte im Übrigen bereits vor dem Produktionsbetrieb der Packmaschine 20 bzw. der Anlage 19 von einem Benutzer über eine insbesondere der Palettiermaschine 21 zugeordnete Kommunikationsschnittstelle, etwa einen Touchscreen oder dergleichen, Vorgabe-Produktionsdaten zu dem Aufbau der jeweiligen Gruppe 10 bzw. der die Gruppe 10 bildenden jeweiligen Stapel 11 übermittelt werden, die dann im Betrieb auf der jeweiligen Palette 18 angeordnet werden sollen.

Insbesondere Vorgabe-Produktionsdaten, die umfassen, für welche der zu befüllenden Kartonpackungen 12 der Stapel 11 derjenigen Palette 18, für die diese bestimmt sind, jeweils ein Deckel 16 vorgesehen ist und für welche nicht und/oder wie viele Stapel 11 von Kartonpackungen 12 auf der jeweiligen Palette 18 angeordnet werden sollen, für die diese bestimmt sind, und wie viele Kartonpackungen 12 jeder Stapel 11 der jeweiligen Palette 18 aufweisen soll.

Die Steuereinrichtung kann dann im Betrieb der Anlage 19 die Vorgabe-Produktionsdaten in eine Abfolge von Steuerbefehlen umsetzen, auf Basis derer die Packmaschine 20 die Kartonpackungen 12, die für die jeweilige Palette 18 bestimmt sind, entweder mit einem Deckel 16 versieht oder nicht.

Schließlich ist in dem vorliegenden Ausführungsbeispiel noch vorgesehen, dass mittels eines insbesondere optischen Sensors 24, der im Bereich und/oder stromab eines oder des Aggregats zum Aufbringen der Deckel 16 auf die Kartonpackungen 12 angeordnet ist, geprüft wird, ob die jeweilige Kartonpackung 12, die die Packmaschine 20 verlässt, entsprechend der jeweiligen steuerungstechnischen Vorgabe tatsächlich einen Deckel 16 aufweist oder nicht.

Für den Fall, dass die Prüfung ergibt, dass die geprüfte Kartonpackung 12 keinen Deckel 16 aufweist, für sie aber eigentlich von der Steuerungseinrichtung ein Deckel 16 vorgesehen ist/war, kann dann ein Fehlersignal erzeugt werden. Genauso kann auch für den Fall, dass die Prüfung ergibt, dass die geprüfte Kartonpackung 12 einen Deckel 16 aufweist, für sie aber eigentlich von der Steuerungseinrichtung kein Deckel 16 vorgesehen ist, ein Fehlersignal erzeugt werden.

Das jeweilige Fehlersignal kann dann auch beispielsweise einen Stopp der Anlage zur Folge haben.

### Bezugszeichenliste:

- 10: Gruppe von Packungsstapeln
- 11: Stapel
- 12: Kartonpackungen
- 13: Produkte
- 14 A-F: Lagen von Kartonpackungen
- 15: offene Oberseite
- 16: Deckel
- 17: Bodenseite
- 18: Palette
- 19: Anlage
- 20: Packmaschine
- 21: Palettiermaschine
- 22: Kommunikationskanal
- 23: Förderer
- 24: Sensor

## Patentansprüche

1. Verfahren zum Befüllen von oben offenen Kartonpackungen (12) mit jeweils einer Gruppe von Gegenständen sowie zum Stapeln der befüllten (insbesondere identischen) Kartonpackungen (12) auf einer Palette (18), bei dem einzelne Kartonpackungen (12) in einer Packmaschine (20) mit den Gegenständen der jeweiligen Gruppe befüllt und danach entlang einer insbesondere geradlinigen Förderstrecke zu einer Palettiermaschine (21) gefördert werden, in der mehrere Stapel (11) von Kartonpackungen (12) mit jeweils aufeinandergestapelten Kartonpackungen (12) gebildet und auf einer gemeinsamen Palette (18) angeordnet werden, wobei mehrere für dieselbe Palette (18) bestimmte Kartonpackungen (12) in der Packmaschine (20) nach dem Befüllen derselben mit einem die jeweilige Kartonpackung (12) verschließenden Deckel (16) versehen werden, **dadurch gekennzeichnet, dass** in der Packmaschine (20) nicht sämtliche für dieselbe Palette (18) bestimmten Kartonpackungen (12) mit einem Deckel (16) versehen werden, sondern gezielt nur eine Untermenge von hierfür vorgesehenen Kartonpackungen (12), mindestens allerdings jeweils diejenige Kartonpackung (12), die für die jeweils oberste Kartonpackung (12) jedes Stapels (11) der Palette (18) bestimmt ist.

2. Verfahren gemäß Anspruch 1, **dadurch gekennzeichnet, dass**, insbesondere zur Stabilisierung der Stapel (11) auf der Palette (18), in einem, dem oder jedem Stapel (11) der Palette (18), ggf. zusätzlich, mindestens eine unterhalb der obersten Kartonpackung (12) des jeweiligen Stapels (11) in einer Zwischenebene befindliche Kartonpackung (12) mit einem Deckel (16) versehen wird.

3. Verfahren gemäß Anspruch 1 oder 2, **dadurch gekennzeichnet, dass** alle Kartonpackungen (12) sämtlicher Stapel (11), die sich in einer gemeinsamen, unterhalb der jeweiligen obersten Kartonpackung (12) befindlichen Zwischenebene befinden, mit einem Deckel (16) versehen werden.

4. Verfahren gemäß Anspruch 1, 2 oder 3, **dadurch gekennzeichnet, dass** eine Steuereinrichtung, insbesondere die Steuereinheit der Palettiermaschine (21), der Packmaschine (20) im Betrieb der Packmaschine (20) für jede Kartonpackung (12), die diese befüllt, vorgibt, ob die jeweilige Kartonpackung (12) mit einem Deckel (16) zu versehen ist oder nicht, vorzugsweise unter Übermittlung dieser Vorgaben über einen zwischen der Palettiermaschine (21) und der Packmaschine (20) direkt verlaufenden, drahtlosen oder drahtgebundenen Kommunikationskanal.

5. Verfahren gemäß Anspruch 4, **dadurch gekennzeichnet, dass** der Steuereinrichtung vor dem Betrieb der Packmaschine (20) von einem Benutzer über eine insbesondere der Palettiermaschine (21) zugeordnete Kommunikationsschnittstelle Produktionsdaten zu dem Aufbau der Stapel (11) der jeweiligen Palette (18) übermittelbar und vorgebbar sind, die im Betrieb auf der jeweiligen Palette (18) angeordnet werden sollen, insbesondere Produktionsdaten, die umfassen, für welche der zu befüllenden Kartonpackungen (12) der Stapel (11) derjenigen Palette (18), für die diese bestimmt sind, jeweils ein Deckel (16) vorgesehen ist und für welche nicht und/oder wie viele Stapel (11) von Kartonpackungen (12) auf der jeweiligen Palette (18) angeordnet werden sollen, für die diese bestimmt sind, und wie viele Kartonpackungen (12) jeder Stapel (11) der jeweiligen Palette (18) aufweisen soll.

6. Verfahren gemäß Anspruch 5, **dadurch gekennzeichnet, dass** die Steuereinrichtung die Produktionsdaten in eine Abfolge von Steuerbefehlen umsetzt, auf Basis derer die Packmaschine (20) die Kartonpackungen (12), die für die jeweilige Palette (18) bestimmt sind, entweder mit einem Deckel (16) versieht oder nicht.

7. Verfahren gemäß einem oder mehreren der vorhergehenden Ansprüche, **dadurch gekennzeichnet, dass** die Palettiermaschine (21) unmittelbar stromab der Packmaschine (20) angeordnet ist, sodass die befüllten Kartonpackungen (12) direkt von der Palettiermaschine (21) zu der Packmaschine (20) gefördert werden.

8. Verfahren gemäß einem oder mehreren der vorhergehenden Ansprüche, **dadurch gekennzeichnet, dass** die Packmaschine (20) ein Aggregat zum Aufbringen von Deckeln (16) auf die Kartonpackungen (12) aufweist, das vorzugsweise im Maschinentakt Deckel (16) auf die Kartonpackungen (12) aufbringt, und das jeweils, insbesondere von einer oder der Steuereinrichtung, bevorzugt einer oder der Steuereinheit der Packmaschine (20), für jede Kartonpackung (12), für die kein Deckel (16) vorgesehen ist, gesperrt wird, sodass es auf diese keinen Deckel (16) aufbringt.

9. Verfahren gemäß einem oder mehreren der vorhergehenden Ansprüche, **dadurch gekennzeichnet, dass** mittels eines insbesondere optischen Sensors, der im Bereich und/oder stromab eines oder des Aggregats zum Aufbringen der Deckel (16) auf die Kartonpackungen (12) angeordnet ist, geprüft wird, ob die jeweilige Kartonpackung (12) einen Deckel (16) aufweist oder nicht.

10. Verfahren gemäß Anspruch 9, **dadurch gekennzeichnet, dass** für den Fall, dass die Prüfung ergibt, dass die geprüfte Kartonpackung (12) keinen Deckel (16) aufweist, für sie aber ein Deckel (16) vorgesehen ist, ein Fehlersignal erzeugt wird und/oder dass für den Fall, dass die Prüfung ergibt, dass die geprüfte Kartonpackung (12) einen Deckel (16) aufweist, für sie aber kein Deckel (16) vorgesehen ist, ein Fehlersignal erzeugt wird.

11. Verfahren gemäß Anspruch 10, **dadurch gekennzeichnet, dass** die Packmaschine (20) und/oder die Palettiermaschine (21) nach einem solchen Fehlersignal gestoppt wird.

12. Verfahren gemäß einem oder mehreren der vorhergehenden Ansprüche, **dadurch gekennzeichnet, dass** die Kartonpackungen (12) (im unbefüllten Zustand) jeweils über eine ganz oder teilweise offene Oberseite verfügen, die nach dem Befüllen entweder in der Packmaschine (20) mit dem jeweiligen Deckel (16) oder in der Palettiermaschine (21) durch eine von der Palettiermaschine (21) unmittelbar darüber angeordnete (insbesondere identische) Kartonpackung (12) vollständig verschlossen wird, insbesondere unter Überdeckung der offenen Oberseite durch die Bodenseite der darüber angeordneten Kartonpackung (12).

13. Anlage zum Befüllen von oben offenen Kartonpackungen (12) mit jeweils ein oder mehreren Gegenständen sowie zum Stapeln der befüllten (insbesondere identischen) Kartonpackungen (12) auf einer Palette (18), insbesondere zur Durchführung des Verfahrens gemäß einem oder mehreren der vorhergehenden Ansprüche 1 - 12, mit einer Packmaschine (20), mit der einzelne Kartons mit den Gegenständen befüllbar sind und die ein Aggregat aufweist zum Aufbringen von die befüllten Kartonpackungen (12) verschließenden Deckeln auf die Kartonpackungen (12), mit einer stromab der Packmaschine (20) angeordneten Palettiermaschine (21), die mehrere Stapel (11) von Kartonpackungen (12) mit jeweils aufeinandergestapelten Kartonpackungen (12) bilden und auf einer gemeinsamen Palette (18) anordnen kann, und mit einem Förderer, mit dem entlang einer insbesondere geradlinigen Förderstrecke die befüllten Kartonpackungen (12) von der Packmaschine (20) zu der Palettiermaschine (21) förderbar sind, **dadurch gekennzeichnet, dass** die Anlage eine Steuereinrichtung aufweist, die derart ausgebildet und eingerichtet ist, dass in der Packmaschine (20) durch das Aggregat zum Aufbringen der Deckel (16) nicht sämtliche für dieselbe Palette (18) bestimmten Kartonpackungen (12) mit einem Deckel (16) versehen werden, sondern gezielt nur eine Untermenge von hierfür vorgesehenen Kartonpackungen (12), mindestens allerdings jeweils diejenige Kartonpackung (12), die für die jeweils oberste Kartonpackung (12) jedes Stapels (11) der Palette (18) bestimmt ist.

14. Einrichtung gemäß Anspruch 13, **gekennzeichnet durch** ein oder mehrere Merkmale der Ansprüche 1 - 12.
